# EUROPEAN PATENT APPLICATION

(11) **EP 4 481 878 A1**
(43) Date of publication of application: **25.12.2024**
(21) Application number: 22926856.0
(22) Date of filing: 07.12.2022
(51) Int. Cl.: H01M 10/0568

(54) **MAGNESIUM BATTERY ELECTROLYTE AND PREPARATION METHOD THEREFOR, AND MAGNESIUM BATTERY**

(30) Priority: 15.02.2022 CN 202210139050
(71) Applicant: Tsinghua University, Beijing 100084 (CN)
(72) Inventor: ZHANG, Yuegang, Beijing 100084 (CN); FAN, Haiyan, Beijing 100084 (CN); XIAO, Jianhua, Beijing 100084 (CN); ZHANG, Xinxin, Beijing 100084 (CN); LIN, Qiyuan, Beijing 100084 (CN)
(74) Representative: Barker Brettell LLP
(86) International application number: PCT/CN2022/137098
(87) International publication number: WO 2023/155553

(57) **Abstract**

The present application provides an electrolytic solution for magnesium batteries, a method for preparing the same, and a magnesium battery. The electrolytic solution for magnesium batteries comprises a non-aqueous solvent and an electrolyte salt, wherein the non-aqueous solvent is selected from one or more of imidazole ionic liquids, pyrrole ionic liquids, piperidine ionic liquids, ether compounds, ester compounds, pyridine compounds, nitrile compounds, sulfone compounds, or ketone compounds; the electrolyte salt has a chemical formula [MgₘLiₙXₒ(HMDS)₂ₘ₊ₙ₋ₒRₚ]·M_{q}. The electrolytic solution for magnesium batteries provided by the present application is endowed with good stability, strong water resistance and impurity resistance, and excellent electrochemical performance under the mutual synergistic effect among the components, and at the same time, it can promote reversible deposition-dissolution of magnesium, reduce the over-potential, inhibit formation of a passivation layer of magnesium salts on the surface of the anode, and increase the charging-discharging specific capacity and cycling stability of the magnesium battery.

## Description

### CROSS-REFERENCE TO RELATED APPLICATION

This application claims priority to Chinese Patent Application No. 202210139050.2 entitled "Electrolytic solution for magnesium batteries, method for preparing the same, and magnesium batteries" and filed on February 15, 2022, which is incorporated herein by reference in its entirety.

### TECHNICAL FIELD

The present application belongs to the field of energy technology, and specifically relates to an electrolytic solution for magnesium batteries, a method for preparing the same, and magnesium batteries.

### BACKGROUND

Magnesium metal is abundant, low cost, environmentally friendly, physicochemical properties thereof are more stable and it is not easy to grow dendrites, has a high theoretical volumetric specific capacity (3833 mA·h/cm³). The magnesium battery system with magnesium metal as the negative electrode material has the advantages of high energy density, low cost, and high safety, and it is one of the new energy storage systems with great development prospects.

However, due to that the magnesium ions have a high charge density and low reduction potential (-2.37 V vs. SHE), resulting in that most of the organic solvents and magnesium salts will react with magnesium metal, generating a passivation layer on the surface of magnesium metal to impede magnesium ions conduction, which is not conducive to the operation of magnesium batteries. In addition, the surface of magnesium metal is very susceptible to impurities (such as trace water, oxygen, carbon dioxide, etc.), which makes the interface between electrode and electrolytic solution unstable and unable to conduct magnesium ions efficiently during long-time charging and discharging process, which leads to the high charging and discharging over-potential of the battery, nonuniformity of deposition-dissolution, and even short-circuit problems, which eventually lead to the failure of magnesium batteries.

### SUMMARY

In view of this, the present application provides an electrolytic solution for magnesium batteries, a method for preparing the same, and a magnesium battery, aiming to solve the problem that the electrolytic solution for magnesium batteries has poor interfacial stability performance, is highly susceptible to impurities, and is unable to conduct magnesium ions effectively.

On the one hand, embodiments of the present application provide an electrolytic solution for magnesium batteries, comprising a non-aqueous solvent and an electrolyte salt, wherein:
the non-aqueous solvent is selected from one or more of imidazole ionic liquids, pyrrole ionic liquids, piperidine ionic liquids, ether compounds, lipid compounds, pyridine compounds, nitrile compounds, sulfone compounds, or ketone compounds;
the electrolyte salt has a chemical formula [MgₘLiₙXₒ(HMDS)₂ₘ₊ₙ₋ₒRₚ]·M_{q}, wherein X is selected from halogen ions and/or bis(trifluoromethanesulfonyl)imide ions;
HMDS represents hexamethyldisilamino ion;
R is selected from one or more of alkyl, fluoroalkyl or aryl;
M is a non-aqueous solvent molecular ligand;
m is an integer selected from 1 to 6, n is an integer selected from 1 to 6, o is an integer selected from 1 to 6, p is an integer selected from 0 to 6, and q is an integer selected from 1 to 20.

According to embodiments of an aspect of the present application, the imidazole ionic liquid is selected from 1-ethyl-3-methylimidazolium tetrafluoroborate and/or 1-ethyl-3-methylimidazolium bis(trifluoromethanesulfonyl)imide;
the pyrrole ionic liquid is selected from N-butyl-N-methylpyrrolidinium bis(trifluoromethanesulfonyl)imide;
the piperidine ionic liquid is selected from N-butyl-N-methylpiperidinium bis(trifluoromethanesulfonyl)imide.

According to embodiments of an aspect of the present application, the ether compound is selected from one or more of tetrahydrofuran, ethylene glycol dimethyl ether, diethylene glycol dimethyl ether, triethylene glycol dimethyl ether, tetraethylene glycol dimethyl ether, dioxane, or polyethylene glycol dimethyl ether;
the ester compound is selected from ethyl acetate;
the pyridine compound is selected from one or more of pyridine, 2-methylpyridine, 3-methylpyridine, 4-methylpyridine, 2,6-dichloropyridine or 2-aminopyridine;
the nitrile compound is selected from acetonitrile;
the sulfone compound is selected from dimethyl sulfoxide.

According to embodiments of an aspect of the present application, the non-aqueous solvent is tetrahydrofuran and the halogen ion is a chloride ion.

According to embodiments of an aspect of the present application, p is 1, 2, 3, 4, 5 or 6.

On the other hand, the embodiments of the present application provide a method for preparing an electrolytic solution for magnesium batteries, comprising the following steps:
mixing an anhydrous magnesium salt, an anhydrous lithium salt and a non-aqueous solvent and reacting at 25°C-200°C for 3 h-48 h, cooling to -30°C-25°C to obtain the electrolytic solution for magnesium batteries;
wherein the anhydrous magnesium salt is selected from one or more of magnesium chloride, magnesium fluoride, magnesium bromide, magnesium iodide, bis(hexamethyldisilazido)magnesium, magnesium bis(trifluoromethanesulfonyl)imide, or Grignard's reagent;
the anhydrous lithium salt is selected from lithium bis(trimethylsilyl)amide or a second anhydrous lithium salt, wherein the second anhydrous lithium salt is selected from one or more of lithium chloride, lithium fluoride, lithium bromide, lithium iodide, or lithium bis(trifluoromethanesulfonyl)imide.

According to embodiments of another aspect of the present application, the molar ratio of the anhydrous magnesium salt to the anhydrous lithium salt is 1: (0.1-4).

According to embodiments of another aspect of the present application, the concentration of the electrolyte salt is 0.1-10 mol/L.

According to embodiments of another aspect of the present application, the concentration of the electrolyte salt is 0.1-3 mol/L.

On a further aspect, embodiments of the present application provide a magnesium battery comprising a positive electrode, a separator, a negative electrode and the aforementioned electrolytic solution for magnesium batteries.

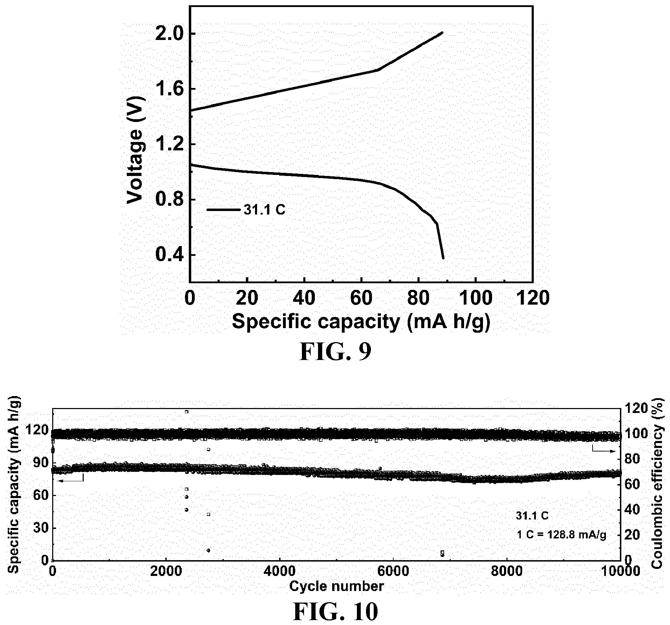

Compared with the prior art, the present application has at least the following beneficial effects:
(1) The electrolytic solution for magnesium batteries provided by the present application is endowed with good stability, strong water resistance and impurity resistance, and excellent electrochemical performance under the mutual synergistic effect among the components, and at the same time, it can promote reversible deposition-dissolution of magnesium, reduce the over-potential, inhibit formation of a passivation layer of magnesium salts on the surface of the anode, and increase the charging-discharging specific capacity and cycling stability of the magnesium battery.
(2) The method for preparing the electrolytic solution for magnesium batteries provided in the present application is simple and easy to implement, has low requirements for equipment, is well compatible with existing processes, and has great potential for large-scale application.
(3) The magnesium battery provided in the present application has a good charging/discharging specific capacity and a long cycle life. As can be seen from FIG. 10, the magnesium battery comprising the electrolytic solution for magnesium batteries described above has a high charging/discharging specific capacity and a long cycle life.

### DESCRIPTION OF THE DRAWINGS

In order to explain the technical solutions of the embodiments of the present application more clearly, the following will briefly introduce the drawings that need to be used in the embodiments of the present application. Apparently, the drawings described below are only some embodiments of the present application. A person of ordinary skill in the art can obtain other drawings based on the accompanying drawings without creative work.
FIG. 1 illustrates a Raman spectrogram of the electrolytic solution for magnesium batteries from Example 1 of the present application.
FIG. 2 illustrates a nuclear magnetic resonance spectrogram of the electrolytic solution for magnesium batteries from Example 1 of the present application.
FIG. 3 illustrates a cyclic voltammetry curve of deposition-dissolution of magnesium metal in the electrolytic solution for magnesium batteries from Example 2 of the present application in the absence of impurity interference.
FIG. 4 illustrates the cyclic voltammetry curve of deposition-dissolution of magnesium metal in the presence of trace water, carbon dioxide, and oxygen interference in the electrolytic solution for magnesium batteries from Example 2 of the present application.
Figure 5 illustrates the cyclic voltammetry curve of deposition-dissolution of magnesium metal in the presence of 1000 ppm H₂O interference in the electrolytic solution for magnesium batteries from Example 2 of the present application.
FIG. 6 illustrates the cyclic voltammetry curve of deposition-dissolution of magnesium metal in the presence of trace water, carbon dioxide, and oxygen interferences in the electrolytic solution for magnesium batteries from Comparative Example 1 of the present application.
Figure 7 illustrates the cyclic voltammetry curve of deposition-dissolution of magnesium metal in the presence of 400 ppm H₂O interference in the electrolytic solution for magnesium batteries from Comparative Example 1 of the present application.
FIG. 8 illustrates the linear sweep curve of deposition-dissolution of magnesium metal in the presence of trace water, carbon dioxide, and oxygen interferences in the electrolytic solution for magnesium batteries from Example 2 of the present application.
FIG. 9 illustrates the charging/discharging specific capacity-voltage diagram of the electrolytic solution for magnesium batteries from Example 2 of the present application.
FIG. 10 illustrates the charging/discharging cycle-specific capacity diagram of the electrolytic solution for magnesium batteries from Example 2 of the present application.

### DETAILED DESCRIPTION

In order to make the purpose, the technical solution and beneficial technical effect of the present application clearer, the present application is described in further detail in combination with the following embodiments. It should be understood that the embodiments described in this specification are only for the purpose of explaining the present application and are not intended to limit the present application.

For the sake of brevity, only certain ranges are explicitly disclosed herein. However, ranges from any lower limit may be combined with any upper limit to recite a range not explicitly recited, as well as, ranges from any lower limit may be combined with any other lower limit to recite a range not explicitly recited, in the same way, ranges from any upper limit may be combined with any other upper limit to recite a range not explicitly recited. Additionally, within a range includes every point or individual value between its end points even though not explicitly recited. Thus, every point or individual value may serve as its own lower or upper limit combined with any other point or individual value or any other lower or upper limit, to recite a range not explicitly recited.

In the context herein, it is to be noted that, unless otherwise indicated, "above" and "below" are inclusive of the present number, "more" in the phrase 'one or more' means two or more.

The foregoing contents of the present application are not intended to describe every disclosed embodiment or every implementation of the present application. The following description more specifically exemplifies exemplary embodiments. At various points throughout the application, guidance is provided through a series of embodiments that may be used in various combinations. In the various examples, the enumerations are provided as representative groups only and should not be construed as exhaustive.

Currently, among the electrolytic solution for magnesium batteries that has been developed, inorganic salts and their analogous systems, such as inorganic magnesium aluminum halogen salt (MACC) systems, inorganic magnesium lithium chloride salt (MLCC) systems, and the like, are highly advantageous in terms of utility due to advantages such as low cost and one-step synthesis. However, the stability of such systems is poor, and they are easily affected by impurities (such as a small amount of water, oxygen, carbon dioxide, etc.) and cause surface passivation of magnesium sheets, which leads to a large charging and discharging over-potential of the battery, uneven deposition-dissolution, and even short-circuit problems, and ultimately leads to the failure of magnesium batteries.

Based on this, the inventors have carried out a lot of research, aiming to provide an electrolytic solution with good water resistance, impurity resistance and excellent electrochemical properties, to promote the reversible deposition-dissolution of magnesium, to reduce the over-potential, to inhibit the formation of magnesium salts on the surface of the anode as a passivation layer, and thus to improve the charging and discharging capacity and cycle life of magnesium batteries.

### Electrolytic solution for magnesium batteries

The embodiments of the first aspect of the present application provide an electrolytic solution for magnesium batteries, comprising a non-aqueous solvent and an electrolyte salt, wherein the non-aqueous solvent is selected from one or more of imidazole ionic liquids, pyrrole ionic liquids, piperidine ionic liquids, ether compounds, ester compounds, pyridine compounds, nitrile compounds, sulfone compounds, or ketone compounds;
the electrolyte salt has a chemical formula [MgₘLinXₒ(HMDS)₂ₘ₊ₙ₋ₒRp]·M_{q}, wherein X is selected from halogen ions and/or bis(trifluoromethanesulfonyl)imide ions; HMDS represents hexamethyldisilamino ion; R is selected from one or more of alkyl, fluoroalkyl or aryl; M is a non-aqueous solvent molecular ligand; m is an integer selected from 1 to 6, n is an integer selected from 1 to 6, o is an integer selected from 1 to 6, p is an integer selected from 0 to 6, and q is an integer selected from 1 to 20.

In the electrolytic solution for magnesium batteries according to the embodiments of the present application, by adding the above electrolyte salt and non-aqueous solvent, the electrolytic solution for magnesium batteries can be made to have good stability, strong resistance to water and impurities, and excellent electrochemical properties, thereby endowing the magnesium battery with higher charging/discharging specific capacity and cycling performance.

The negative electrode magnesium metal is relatively stable, but it can still react with most reducible compounds such as hydrocarbons, alcohols, phenols, amines, aldehydes, water, carbon dioxide and oxygen, etc., and when these solvents are used in the electrolyte solution, a passivation layer insulating both electrons and ions is formed on the surface of the negative electrode magnesium metal, which hinders the migration of Mg²⁺ and is not conducive to the full exertion of the battery performance. However, the non-aqueous solvent in the embodiments of the present application can realize the reversible deposition-dissolution of magnesium and will not form an insulating phase at the negative electrode magnesium/electrolytic solution interface, which can promote the charging/discharging specific capacity and cycling stability performance of the magnesium battery.

According to embodiments of the present application, the Mg²⁺, Li⁺, X⁻, HMDS⁻, R, and non-aqueous solvent molecular ligands in the electrolyte salt described above will form an aggregate with a cluster structure, which can promote the transport of magnesium ions in the electrolytic solution. Second, due to its strong reducing properties, HMDS⁻ can react preferentially with trace impurities such as water, carbon dioxide, and oxygen, which in turn protects the negative electrode magnesium from passivation while imparting good water resistance to the electrolytic solution for magnesium batteries.

In some embodiments, in the chemical formula [MgₘLiₙXₒ(HMDS)₂ₘ₊ₙ₋ₒRₚ]·M_{q}, m may be 1, 2, 3, 4, 5, or 6. m may also be in the range consisting of any of the above values.

In some embodiments, in the chemical formula [MgₘLiₙXₒ(HMDS)₂ₘ₊ₙ₋ₒRₚ]·M_{q}, n may be 1, 2, 3, 4, 5, or 6. n may also be in the range consisting of any of the above values.

In some embodiments, in the chemical formula [MgₘLiₙXₒ(HMDS)₂ₘ₊ₙ₋ₒRₚ]·M_{q}, o may be 1, 2, 3, 4, 5, or 6. o may also be in the range consisting of any of the above values.

In some embodiments, in the chemical formula p may be 0, 1, 2, 3, 4, 5, or 6. p may also be in the range consisting of any of the above values.

In some embodiments, in the chemical formula [MgₘLiₙXₒ(HMDS)₂ₘ₊ₙ₋ₒRₚ]·M_{q}, q may be 1, 4, 8, 12, 16, or 20. q may also be in the range consisting of any of the above values.

In some embodiments, the imidazole ionic liquid is selected from 1-ethyl-3-methylimidazolium tetrafluoroborate and/or 1-ethyl-3-methylimidazolium bis(trifluoromethanesulfonyl)imide.

In some embodiments, the pyrrole ionic liquid is selected from N-butyl-N-methylpyrrolidinium bis(trifluoromethanesulfonyl)imide.

In some embodiments, the piperidine ionic liquid is selected from N-butyl-N-methylpiperidinium bis(trifluoromethanesulfonyl)imide.

According to embodiments of the present application, the above ionic liquids have good electrical conductivity and a stable electrochemical potential window, which can promote the migration of Mg²⁺ in the electrolytic solution, and thus enhance the cycling stability of the battery.

In some embodiments, the ether compound is selected from one or more of tetrahydrofuran, ethylene glycol dimethyl ether, diethylene glycol dimethyl ether, triethylene glycol dimethyl ether, tetraethylene glycol dimethyl ether, dioxane, or polyethylene glycol dimethyl ether.

In some embodiments, the ester compound is selected from ethyl acetate.

In some embodiments, the pyridine compound is selected from one or more of pyridine, 2-methylpyridine, 3-methylpyridine, 4-methylpyridine, 2,6-dichloropyridine or 2-aminopyridine.

In some embodiments, the nitrile compound is selected from acetonitrile.

In some embodiments, the sulfone compound is selected from dimethyl sulfoxide.

In some embodiments, the non-aqueous solvent is tetrahydrofuran and the halogen ion is a chloride ion.

According to embodiments of the present application, when the non-aqueous solvent is tetrahydrofuran and the halogen ion is a chloride ion, the aggregates formed in the cluster structure are more stable, have better water and impurity resistance, and at the same time are more susceptible to reversible deposition-dissolution of magnesium as well as lowering of over-potential.

In some embodiments, the concentration of the above electrolyte salt in the electrolytic solution is 0.1 mol/L-10 mol/L. For example, the concentration of the electrolyte salt may be 0.1 mol/L, 2 mol/L, 4 mol/L, 6 mol/L, 8 mol/L, or 10 mol/L. The concentration of the electrolyte salt in the electrolytic solution for magnesium batteries may also be in the range consisting of any of the above values.

According to an embodiment of the present application, when the concentration is in the above range, the reaction efficiency of the anhydrous magnesium salt and the anhydrous lithium salt in the non-aqueous solvent is higher, and the viscosity of the electrolytic solution is moderate, which is favorable for the transport of Mg²⁺. If the concentration of the electrolyte salt is lower than 0.1 mol/L, the ionic conductivity is lower, making the ohmic polarization of the battery larger; and when the concentration of the electrolyte salt is higher than 10 mol/L, the viscosity of the electrolytic solution is increased, which will cause the ionic mass transfer and diffusion to be hindered, and the concentration polarization of the battery to increase. Preferably, in some embodiments, the concentration of the electrolyte salt is 0.1 mol/L-3 mol/L.

### Method for preparing an electrolytic solution for magnesium batteries

The present application, on the other hand, also provides a method for preparing an electrolytic solution for magnesium batteries, comprising: mixing an anhydrous magnesium salt, an anhydrous lithium salt and a non-aqueous solvent and reacting at 25°C-200°C for 3 h-48 h, cooling to -30°C-25°C to obtain the electrolytic solution for magnesium batteries;
wherein the anhydrous magnesium salt is selected from one or more of magnesium chloride, magnesium fluoride, magnesium bromide, magnesium iodide, bis(hexamethyldisilazido)magnesium, magnesium bis(trifluoromethanesulfonyl)imide, or Grignard's reagent;
the anhydrous lithium salt is selected from lithium bis(trimethylsilyl)amide or a second anhydrous lithium salt, wherein the second anhydrous lithium salt is selected from one or more of lithium chloride, lithium fluoride, lithium bromide, lithium iodide, or lithium bis(trifluoromethanesulfonyl)imide.

According to embodiments of the present application, during the preparation of the electrolytic solution for magnesium batteries, in order to prevent the electrolytic solution from being disturbed by water, oxygen or carbon dioxide, it is required to be carried out in a glove box with a water content of <0.1 ppm, an oxygen content of <0.1 ppm, and filled with an inert gas, in which anhydrous magnesium salts, anhydrous lithium salts, and non-aqueous solvents form aggregates with a clustered structure.

In some embodiments, the inert gas is at least one of helium and argon.

In some embodiments, the molar ratio of the anhydrous magnesium salt to the anhydrous lithium salt is 1: (0.1-4). For example, the molar ratio of the anhydrous magnesium salt to the anhydrous lithium salt may be 1: 0.1, 1: 1, 1: 2, 1: 3, or 1: 4. The molar ratio of the anhydrous magnesium salt to the anhydrous lithium salt may also be in the range consisting of any of the above ratios.

According to embodiments of the present application, the Lewis acid-base reaction of the inorganic magnesium salt and the inorganic lithium salt in the ligand is a reversible reaction, and setting the number of moles of the anhydrous magnesium salt to be less than that of the anhydrous lithium salt is conducive to the reversible reaction moving in the direction of generating the electrolyte salt, thereby improving the preparation efficiency of the electrolyte salt.

The method for preparing the electrolytic solution for magnesium batteries according to the present application is a simple preparation method, and the prepared electrolytic solution for magnesium batteries has good miscibility and is a stable system, as well as has strong resistance to water and impurity interference, and there will be no phenomenon of co-deposition of magnesium and other metals, thereby improving the battery performance of the magnesium battery.

### Magnesium Battery

A further aspect of the present application provides a magnesium battery comprising a positive electrode, a separator, a negative electrode, and an electrolytic solution for magnesium batteries according to any embodiment of the first aspect of the present application.

In some embodiments, the positive electrode comprises a positive active material, a conductive agent, a current collector, and a binder; wherein the positive active material may be an inorganic transition metal oxide, a sulfide, or a boride, and preferably, the positive active material is Mo₆S₈.

In some embodiments, the separator includes an organic polymer membrane, a conductive agent, a catalyst, and a binder.

In some embodiments, the negative electrode comprises a negative electrode active material and a binder; wherein the negative electrode active material comprises at least one of a magnesium metal or a magnesium alloy.

The magnesium battery according to the present application, comprising the electrolytic solution for magnesium batteries according to any of the embodiments of the first aspect described above, has good stability, strong water and impurity resistance, and excellent electrochemical performance under the synergistic effect of the components, and can promote the reversible deposition-dissolution of magnesium, reduce the over-potential, and inhibit the formation of the passivation layer of magnesium salts on the surface of an anode, and increase the charging and discharging specific capacity and the cycling stability of the magnesium battery . In view of this, the magnesium battery according to the present application can be applied to energy storage power systems such as hydro, thermal, wind and solar power stations, as well as power tools, military equipment, aerospace and many other applications.

### Examples

The following examples more specifically describe the content disclosed in the present application, and these examples are only used for explanatory description, because various modifications and changes within the scope of the present disclosure are apparent to those skilled in the art. Unless otherwise stated, all parts, percentages, and ratios described in the following examples are based on weight, and all reagents used in the examples are commercially available or synthesized according to conventional methods and can be directly used without further treatment, and all instruments used in the examples are commercially available.

### Example 1

Preparation of electrolytic solution for magnesium batteries: in a glove box with oxygen and water content below 1 ppm and filled with argon, 0.3 mol/L anhydrous magnesium chloride (MgCl₂), 0.15 mol/L anhydrous lithium hexamethyldisilazide (LiHMDS), and tetrahydrofuran were mixed and reacted at 25°C for 24 h, and then cooled down to 25°C, to obtain the electrolytic solution for magnesium batteries.

### Example 2

Preparation of electrolytic solution for magnesium batteries: in a glove box with oxygen and water content below 1 ppm and filled with argon, 0.3 mol/L anhydrous magnesium chloride (MgCl₂), 0.15 mol/L anhydrous lithium hexamethyldisilazide (LiHMDS), 0.1 mol/L anhydrous lithium chloride (LiCl), and tetrahydrofuran were mixed and reacted at 25°C for 24 h, and then cooled down to 25°C, to obtain the electrolytic solution for magnesium batteries.

### Comparative Example 1

Preparation of electrolytic solution for magnesium batteries: in a glove box with oxygen and water content below 1 ppm and filled with argon, 0.3 mol/L anhydrous magnesium chloride (MgCl₂), 0.1 mol/L anhydrous lithium chloride (LiCl) and tetrahydrofuran were mixed and reacted at 25°C for 24 h, and then cooled down to 25°C to obtain electrolytic solution for magnesium batteries.

### Test section

Raman spectroscopy test of electrolytic solution for magnesium batteries: the electrolyte was encapsulated in a quartz tube and tested by using a He-Ne laser (632.817 nm) to obtain the Raman spectra of the electrolytic solution.

NMR test of electrolytic solution for magnesium batteries: ⁷Li NMR (155,50 MHz, d8-THF, 298K, standardized with 1 M LiCl/D₂O solution).

Cyclic voltammetry test of deposition/dissolution of magnesium metal: carbon paper was chosen as the working electrode, and magnesium sheet was used as the counter electrode and reference electrode to assemble the Mg/C cell for cyclic voltammetry test, in which, the sweep rate was 25 mV/s.

Linear sweep test of deposition/dissolution of magnesium metal: carbon paper was chosen as the working electrode, magnesium sheet as the counter electrode and reference electrode, and the Mg/C cell was assembled for cyclic voltammetry test, in which the sweep rate was 25 mV/s.

Test of magnesium battery: the preparation of magnesium full battery was completed by installing Mo₆S₈ positive electrode, the electrolytic solution, the separator, and the magnesium sheet negative electrode in order. The battery was subjected to constant-current charging/discharging test, in which the battery was tested at a voltage range of 0.2-2.0 V, and the test rate of the battery was 31.1 C.

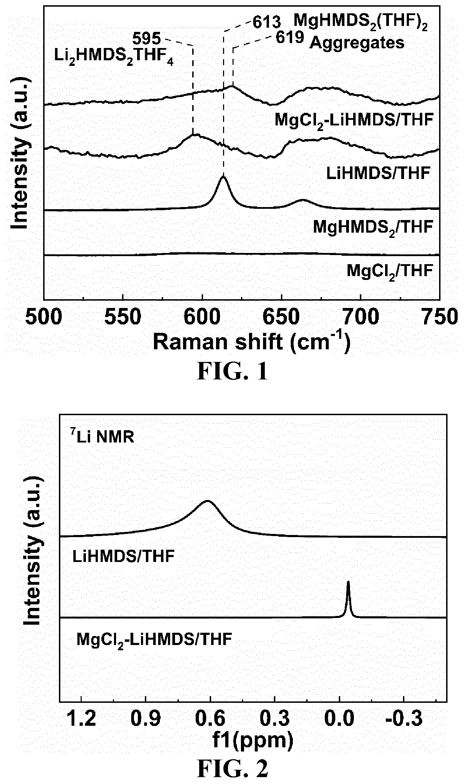

Since the results of the interaction between MgCl₂ and LiCl have been demonstrated and disclosed, the interaction between MgCl₂ and LiHMDS is characterized in FIGS. 1 and 2. As can be seen in FIGS. 1 and 2, the Raman spectra of the electrolyte salt for magnesium batteries of Example 1 of the present application had a peak at 619 cm⁻¹, thus indicating that electrolytic solution for magnesium batteries comprising [MgₘLiₙClₒ(HMDS)₂ₘ₊ₙ₋ₒ]·M_{q}, as the electrolyte salt was successfully synthesized.

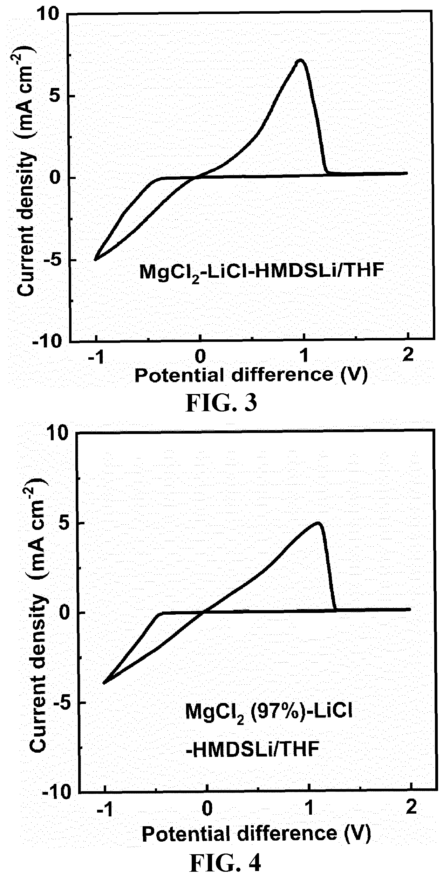

In order to test the performance of the electrolytic solution for magnesium batteries for deposition-dissolution of magnesium, the cyclic voltammetry curves of the electrolytic solution from the Example 2 and Comparative Example 1 were tested with and without interference, as shown in FIGS. 3-7.

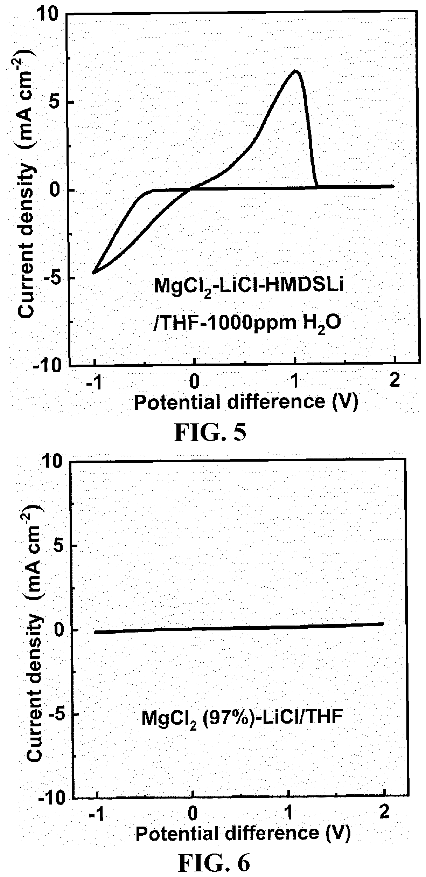

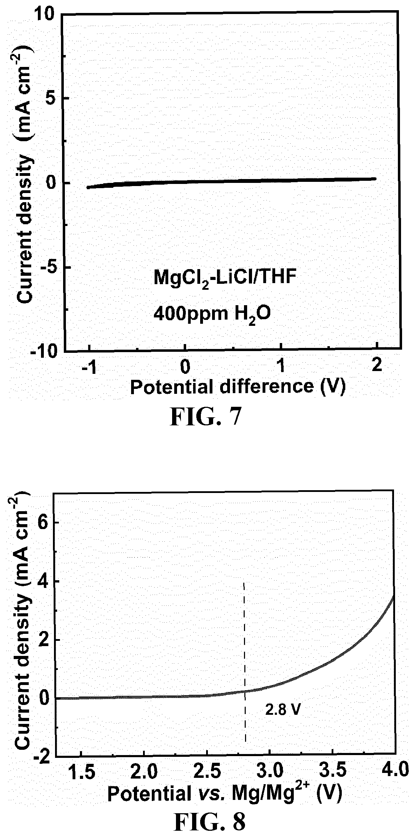

As can be seen from FIG. 3, the deposition of magnesium ions began at 0.4 V and the dissolution of magnesium ions began at the oxidation peak of 0.1 V. From FIG. 4, when the electrolytic solution for magnesium batteries was disturbed by impurities, the deposition potential of magnesium was 0.6 V, and the dissolution potential was 0.1 V. It can be seen that the electrolytic solution was still able to complete the reversible deposition-dissolution of magnesium in a better way when there was interference by impurities, which indicated that the electrolytic solution had a good performance of resistance to impurities. The cyclic voltammetry curve of deposition-dissolution of magnesium of the electrolytic solution for magnesium batteries prepared in a glove box with a water content of 1000 ppm was shown in FIG. 5, in which the deposition potential of magnesium was 0.5 V and the dissolution potential was 0.1 V. It can be seen that the electrolytic solution can still accomplish reversible deposition-dissolution of magnesium well under the circumstance of a higher content of water, which shown that such electrolytic solution had good resistance to water as well as stability. In contrast, as can be seen from FIGS. 6 and 7, when the LiHMDS salt was not present in the electrolytic solution of Comparative Example 1, the redox peaks for the deposition and dissolution of magnesium metal cannot be observed, which indicated that the LiHMDS salt was the key to make the electrolytic solution water-resistant.

Furthermore, referring to the linear sweep curve of FIG. 8, it can be seen that the electrochemical window of the electrolytic solution for magnesium batteries in Example 2 was greater than 2.8 V (vs. Mg²⁺/Mg), indicating that the electrolytic solution had a wide electrochemical window and excellent performance.

In order to test the application of the electrolytic solution for magnesium batteries from Example 2 in magnesium ion batteries, the Mg/Mo₆S₈ batteries were tested for charging/discharging performance, and the test results were shown in FIGS. 9 and 10. The test results shown that the magnesium battery assembled with the electrolytic solution for magnesium batteries according to the present application had a specific capacity of about 105 mAh g⁻¹ after the first discharging, and a specific capacity of about 83 mAh g⁻¹ after 10,000 cycles, which indicated that the magnesium battery exhibited a good charging and discharging specific capacity and a stable cycling performance.

In summary, by adding the above electrolyte salt and non-aqueous solvent, the electrolytic solution for magnesium batteries can be made to have good stability, strong water resistance and impurity resistance, and excellent electrochemical properties, thereby endowing the magnesium battery with high charging/discharging specific capacity and cycling performance.

The above mentioned descriptions only show particular implementations of the present application and but are not intended to limit the protection scope of the present application. Any modification or replacement readily figured out by a person skilled in the art within the technical scope disclosed in the present application shall fall within the protection scope of the present application. Therefore, the protection scope of the present application shall be determined by the protection scope of the claims.

## Claims

1. An electrolytic solution for magnesium batteries, comprising a non-aqueous solvent and an electrolyte salt, wherein the non-aqueous solvent is selected from one or more of imidazole ionic liquids, pyrrole ionic liquids, piperidine ionic liquids, ether compounds, ester compounds, pyridine compounds, nitrile compounds, sulfone compounds, or ketone compounds;
the electrolyte salt has a chemical formula [MgₘLiₙXₒ(HMDS)₂ₘ₊ₙ₋ₒRₚ]·M_{q}, in which X is selected from halogen ions and/or bis(trifluoromethanesulfonyl)imide ions;
HMDS represents hexamethyldisilamino ion;
R is selected from one or more of alkyl, fluoroalkyl or aryl;
M is a non-aqueous solvent molecular ligand;
m is an integer selected from 1 to 6, n is an integer selected from 1 to 6, o is an integer selected from 1 to 6, p is an integer selected from 0 to 6, and q is an integer selected from 1 to 20.

2. The electrolytic solution for magnesium batteries according to claim 1, wherein the imidazole ionic liquid is selected from 1-ethyl-3-methylimidazolium tetrafluoroborate and/or 1-ethyl-3-methylimidazolium bis(trifluoromethanesulfonyl)imide;
the pyrrole ionic liquid is selected from N-butyl-N-methylpyrrolidinium bis(trifluoromethanesulfonyl)imide;
the piperidine ionic liquid is selected from N-butyl-N-methylpiperidinium bis(trifluoromethanesulfonyl)imide.

3. The electrolytic solution for magnesium batteries according to claim 1, wherein the ether compound is selected from one or more of tetrahydrofuran, ethylene glycol dimethyl ether, diethylene glycol dimethyl ether, triethylene glycol dimethyl ether, tetraethylene glycol dimethyl ether, dioxane, or polyethylene glycol dimethyl ether;
the ester compound is selected from ethyl acetate;
the pyridine compound is selected from one or more of pyridine, 2-methylpyridine, 3-methylpyridine, 4-methylpyridine, 2,6-dichloropyridine or 2-aminopyridine;
the nitrile compound is selected from acetonitrile;
the sulfone compound is selected from dimethyl sulfoxide.

4. The electrolytic solution for magnesium batteries according to claim 1, wherein the non-aqueous solvent is tetrahydrofuran and the halogen ion is a chloride ion.

5. The electrolytic solution for magnesium batteries according to claim 1, wherein p is 1, 2, 3, 4, 5 or 6.

6. A method for preparing an electrolytic solution for magnesium batteries, comprising the following steps:
mixing an anhydrous magnesium salt, an anhydrous lithium salt and a non-aqueous solvent and reacting at 25°C-200°C for 3 h-48 h, cooling to -30°C-25°C to obtain the electrolytic solution for magnesium batteries;
wherein the anhydrous magnesium salt is selected from one or more of magnesium chloride, magnesium fluoride, magnesium bromide, magnesium iodide, bis(hexamethyldisilazido)magnesium, magnesium bis(trifluoromethanesulfonyl)imide, or Grignard's reagent;
the anhydrous lithium salt is selected from lithium bis(trimethylsilyl)amide or a second anhydrous lithium salt, wherein the second anhydrous lithium salt is selected from one or more of lithium chloride, lithium fluoride, lithium bromide, lithium iodide, or lithium bis(trifluoromethanesulfonyl)imide.

7. The method according to claim 6, wherein a molar ratio of the anhydrous magnesium salt to the anhydrous lithium salt is 1: (0.1-4).

8. The method according to claim 6, wherein a concentration of the electrolyte salt is 0.1-10 mol/L.

9. The method according to claim 6, wherein a concentration of the electrolyte salt is 0.1-3 mol/L.

10. A magnesium battery comprising a positive electrode, a separator, a negative electrode, and the electrolytic solution for magnesium batteries according to any one of claims 1-9.
